# EUROPÄISCHE PATENTSCHRIFT

(11) **EP 0 466 643 B1**
(45) Veröffentlichungstag und Bekanntmachung des Hinweises auf die Patenterteilung: **25.05.1994**
(21) Anmeldenummer: 91810508.1
(22) Anmeldetag: 01.07.1991
(51) Int. Cl.: B60J 5/06

(54) **Planenkrampe**
Tarpaulin fastening hook
Crampon de fixation pour bâche

(30) Priorität: 05.07.1990 CH 2244/90
(43) Veröffentlichungstag der Anmeldung: 15.01.1992
(73) Patentinhaber: ALUSUISSE-LONZA SERVICES AG, 8034 Zürich (CH)
(72) Erfinder: van Loo, Johannes C., NL-3218 XR Heenvliet (NL)

(56) Entgegenhaltungen:
- FR-A- 2 535 666
- GB-A- 1 522 301

## Beschreibung

Die Erfindung betrifft eine bügelförmige Planenkrampe, insbesondere ein TIR-Auge für Bordwände von Transportfahrzeugen sowie ein Verfahren zu deren Herstellung.

Lastkraftwagen mit Planenverdeck für den internationalen Warentransport weisen an ihren Bordwänden bügelförmige Planenkrampen oder sogenannte TIR-Augen auf, siehe z.B. GB-A-1 522 301. Ueber diese TIR-Augen werden entsprechende, im Planentuch angeordnete Stahl- oder Messingringe geschoben bzw. geklinkt und mit einem durch die TIR-Augen durchlaufenden Gurt wird die Plane an der Bordwand gesichert.

In der Praxis werden heute TIR-Augen aus Stahl oder Aluminium eingesetzt, die im einfachsten Fall direkt auf die Bordwand aufgenietet werden.

TIR-Augen aus Stahl haben im wesentlichen zwei Nachteile:
1. Damit die Vernietung mit der Bordwand möglich ist, muss ein weicher Stahl verwendet werden, was das Klinken erschwert. Nichtrostender Stahl kann wegen seiner Härte nicht von Hand vernietet werden.
2. TIR-Augen aus weichem Stahl zeigen ein schlechtes Korrosionsverhalten.

Bei TIR-Augen aus Aluminium wirkt sich vor allem der Verschleiss infolge Abrieb durch die Stahl- oder Messingringe im Planentuch nachteilig aus.

Angesichts dieser Gegebenheiten hat sich der Erfinder zum Ziel gesetzt, eine Planenkrampe bzw. ein TIR-Auge bereitzustellen, welche korrosions- und verschleissfest sowie leicht zu klinken ist und eine einfache Herstellung und Montage an einer Bordwand ermöglicht.

Erfindungsgemäss wird die Aufgabe dadurch gelöst, dass die Planenkrampe einen Kern aus Aluminium oder einer Aluminiumlegierung und eine Umhüllung aus korrosions- und verschleissfestem Werkstoff aufweist, wobei der Kern beidends der Umhüllung unter Bildung von Befestigungszapfen um ein Mass aus der Umhüllung ragt. Als Werkstoff für die Umhüllung bietet sich in idealer Weise nichtrostender Stahl an.

Die erfindungsgemässe Planenkrampe weist einerseits die Vorzüge des korrosions- und verschleissfesten Werkstoffs auf und lässt sich andererseits problemlos mit einer Bordwand vernieten, wobei insbesondere bei Bordwänden aus Aluminium die Kontaktkorrosion an der Nietstelle vermindert wird.

Zur Verhinderung der Spaltkorrosion zwischen Stahlumhüllung und Aluminiumkern kann eine Zwischenschicht aus einer Dichtungsmasse, beispielsweise aus Silikon, vorgesehen werden.

Um eine zusätzlich feste Verbindung zwischen Umhüllung und Kern zu gewährleisten, kann die Umhüllung beidends eine Aufweitung aufweisen, welche vom Kernwerkstoff ausgefüllt ist.

Bei einem erfindungsgemässen Verfahren zur Herstellung der Planenkrampe wird ein rohrförmiges Teil aus korrosions- und verschleissfestem Werkstoff derart über einen Stab aus Aluminium oder einer Aluminiumlegierung geschoben, dass der Stab beidends des rohrförmigen Teils um ein Mass übersteht und der Stab mit dem übergeschobenen rohrförmigen Teil anschliessend zu einem Bügel geformt.

Ist eine Dichtungsmasse vorgesehen, so kann diese vor dem Einschieben des Stabes in das rohrförmige Teil auf die Oberfläche des Stabs aufgebracht werden.

Zur festen Verbindung von rohrförmigem Teil und Stab kann das rohrförmige Teil beidends aufgeweitet und der beidends des rohrförmigen Teils überstehende Stab in die Aufweitung eingepresst werden.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in
- Fig. 1:: eine Schrägsicht auf eine Bordwand mit Planenkrampen;
- Fig. 2:: eine teilweise geschnittene Seitenansicht einer Planenkrampe;
- Fig. 3:: ein schematisierter Verfahrensablauf zur Herstellung der Planenkrampe gemäss Fig. 2.

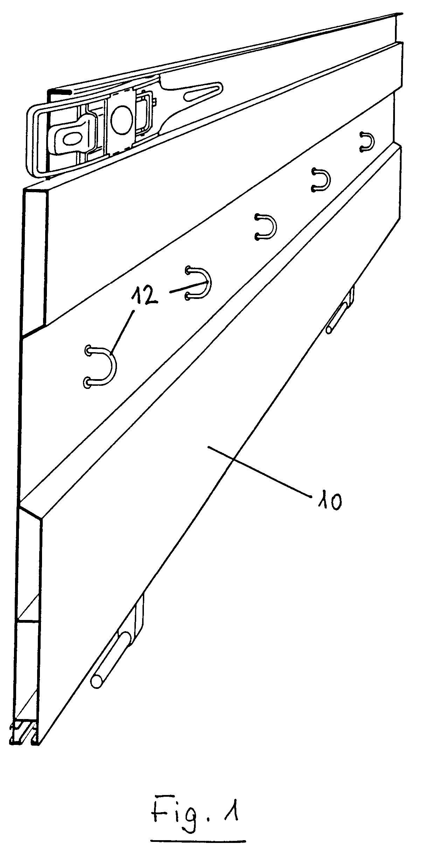

Eine Bordwand 10 aus einem stranggepressten Profil aus einer Aluminiumlegierung eines Lastkraftwagens ist gemäss Fig. 1 mit bügelförmigen Planenkrampen 12 -- auch TIR-Augen genannt -- ausgestattet. Zum Verschliessen des Laderaumes mit einer nicht dargestellten Plane werden im Planentuch angeordnete Stahl- oder Messingringe über die Planenkrampen 12 geklinkt und die Plane an der Bordwand 10 mittels eines durch die Planenkrampen 12 durchlaufenden Gurtes gesichert.

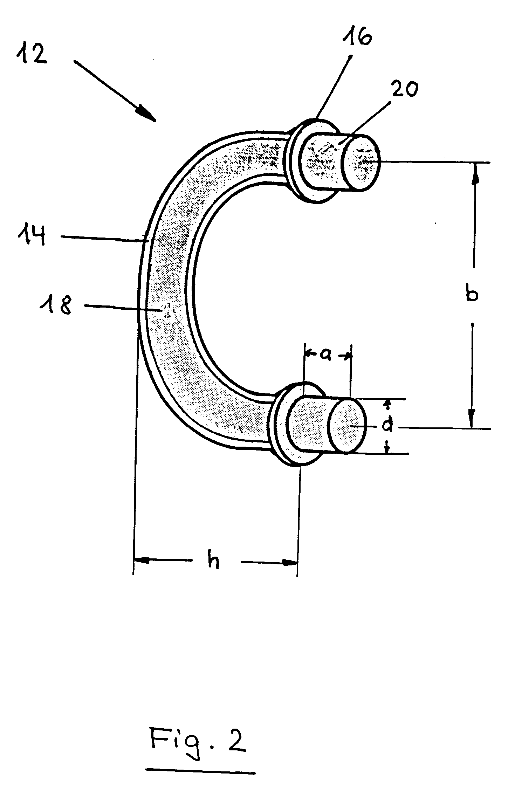

Die bügelförmige Planenkrampe 12 in Fig. 2 besteht aus einer rohrförmigen Umhüllung 14 -- beispielsweise aus nichtrostendem Stahl --, deren Enden 16 aufgeweitet sind. Die Umhüllung 14 umschliesst einen Kern 18 -- beispielsweise aus einer AlMgSi-Legierung im Zustand "weich" --, dessen freie Enden als Befestigungszapfen 20 ausgebildet sind. Die in Fig. 2 dargestellte Planenkrampe 12 kann beispielsweise die folgenden Masse aufweisen:
- a =: 8 mm
- b =: 30 mm
- d =: 6 mm
- h =: 24/31/47 mm

Für eine Montage der Planenkrampen 12 an der Bordwand 10 werden die Befestigungszapfen 20 in entsprechende Bohrungen in der Bordwand 10 eingesetzt und zur Fixierung durch mechanische Verformung auf der Rückseite der Bordwand 10 nietenartig abgeplattet.

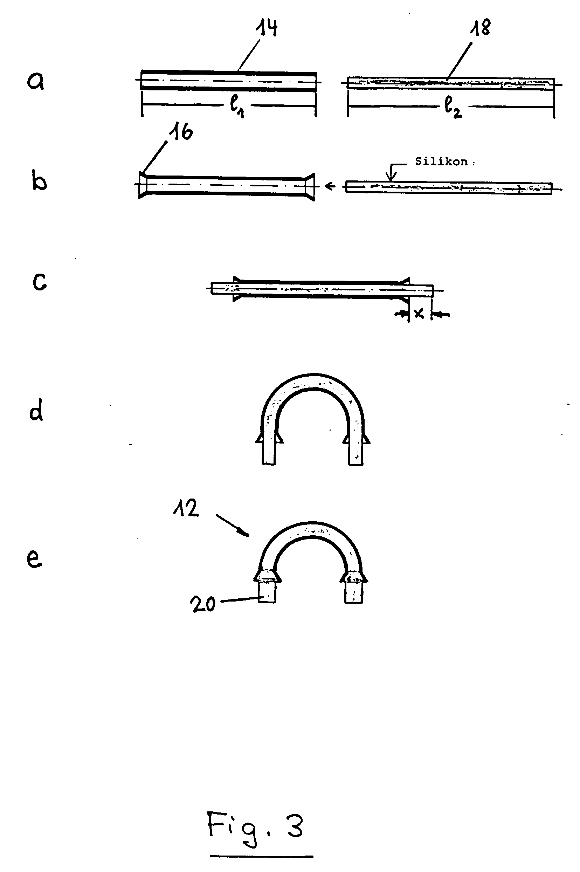

In Fig. 3 sind schematisch die Verfahrensschritte zur Herstellung der Planenkrampe 12 dargestellt:
a) Das rohrförmige Teil 14 einer Länge l₁ aus nichtrostendem Stahl und der stabförmige Kern 18 einer Länge l₂, dessen Durchmesser etwas grösser als die lichte Weite des rohrförmigen Teils 14 ist, werden bereit gestellt. Die Länge l₁ ist entsprechend dem Uebermass x kürzer als l₂.
b) Das rohrförmige Teil 14 wird beidends zur Bildung einer Aufweitung 16 verformt und der stabförmige Kern 18 gegebenenfalls mit Silikon beschichtet.
c) Der stabförmige Aluminiumkern 18 wird in das rohrförmige Teil 14 derart eingeschoben, dass der stabförmige Kern 18 beidends um ein Mass x aus dem rohrförmigen Teil 14 ragt.
d) Das rohrförmige Teil 14 mit eingeschobenem stabförmigen Kern 18 wird auf einer Biegemaschine zu einem Bügel geformt.
e) Die überstehenden Enden 20 des Kerns 18 werden in Richtung auf die Aufweitung 16 gepresst, wodurch die Ausformung 16 mit Aluminium ausgefüllt wird.

## Patentansprüche

1. Bügelförmige Planenkrampe, insbesondere TIR-Auge für Bordwände von Transportfahrzeugen,
dadurch gekennzeichnet,
dass die Planenkrampe (12) einen Kern (18) aus Aluminium oder einer Aluminiumlegierung und eine Umhüllung (14) aus korrosions- und verschleissfestem Werkstoff aufweist, wobei der Kern (18) beidends der Umhüllung (14) unter Bildung von Befestigungszapfen (20) um ein Mass (a) aus der Umhüllung (14) ragt.

2. Planenkrampe nach Anspruch 1, dadurch gekennzeichnet, dass die Umhüllung (14) aus nichtrostendem Stahl besteht.

3. Planenkrampe nach Anspruch 1 oder 2, dadurch gekennzeichnet, dass zwischen Kern (18) und Umhüllung (14) eine Zwischenschicht aus einer Dichtungsmasse, beispielsweise aus Silikon, angeordnet ist.

4. Planenkrampe nach einem der Ansprüche 1 bis 3, dadurch gekennzeichnet, dass die Umhüllung (14) beidends eine Aufweitung (16) aufweist, welche vom Kernwerkstoff ausgefüllt ist.

5. Verfahren zum Herstellen einer Planenkrampe nach einem der Ansprüche 1 bis 4, dadurch gekennzeichnet, dass ein rohrförmiges Teil (14) aus korrosions- und verschleissfestem Werkstoff derart über einen stabförmigen Kern (18) aus Aluminium oder einer Aluminiumlegierung geschoben wird, dass der stabförmige Kern (18) beidends des rohrförmigen Teils (14) um ein Mass (x) übersteht und der stabförmige Kern (18) mit dem übergeschobenen rohrförmigen Teil (14) anschliessend zu einem Bügel geformt wird.

6. Verfahren nach Anspruch 5, dadurch gekennzeichnet, dass die Oberfläche des stabförmigen Kerns (18) vor dem Einschieben in das rohrförmige Teil (14) mit einer Dichtungsmasse versehen wird.

7. Verfahren nach Anspruch 5, dadurch gekennzeichnet, dass das rohrförmige Teil (14) vor dem Einschieben des stabförmigen Kerns (18) beidseitig aufgeweitet und die beidends des rohrförmigen Teils (14) überstehenden Enden des stabförmigen Kerns (18) in die Aufweitung (16) eingepresst werden.

## Claims

1. Stirrup-shaped tarpaulin fastening hook, especially a TIR eye for the side boards of transportation vehicles, characterised in that the tarpaulin fastening hook (12) has a core (18) made of aluminium or an aluminium alloy and a casing (14) of corrosion- or wear-resistant material, the core (18) projecting by an amount (a) at either end of the casing (14), thereby forming fixing pins (20).

2. Tarpaulin fastening hook according to claim 1, characterised in that the casing (14) consists of stainless steel.

3. Tarpaulin fastening hook according to claim 1 or claim 2, characterised in that an intermediate layer consisting of a sealing compound, e.g. silicone, is arranged between the core (18) and the casing (14).

4. Tarpaulin fastening hook according to claims 1 to 3, characterised in that the casing (14) has an expanded portion (16) at either end which is filled with the core material.

5. Process for the manufacture of a tarpaulin fastening hook according to one of claims 1 to 4, characterised in that a tubular component (14) of corrosion- and wear-resistant material is slipped over a bar-shaped core (18) made of aluminium or an aluminium alloy in such a manner that the bar-shaped core (18) projects by an amount (x) at either end of the tubular component (14) and the bar-shaped core (18) and the tubular component (14) slipped over it are then formed into a stirrup.

6. Process according to claim 5, characterised in that the surface of the bar-shaped core (18) is provided with a sealing compound before it is inserted into the tubular component (14).

7. Process according to claim 5, characterised in that the tubular component (14) is expanded at either end prior to the insertion of the bar-shaped core (18) and the ends of the bar-shaped core (18) projecting at either end of the tubular component (14) are pressed into the expanded portions (16).

## Revendications

1. Crampon de bâche en forme d'arceau, notamment anneau TIR, pour ridelles de véhicules de transport,
caractérisé
en ce que le crampon de bâche (12) comprend un noyau (18) en aluminium ou alliage d'aluminium et une gaine (14) en matière résistante à la corrosion et à l'usure, le noyau (18) émergeant de la gaine (14) sur une distance (a) aux deux extrémités de la gaine (14) en formant des tenons de fixation (20).

2. Crampon de bâche selon la revendication 1, caractérisé en ce que la gaine (14) est composée d'acier inoxydable.

3. Crampon de bâche selon la revendication 1 ou 2, caractérisé en ce qu'une couche intermédiaire faite d'une pâte d'étanchéité, par exemple de silicone, est disposée entre le noyau (18) et la gaine (14).

4. Crampon de bâche selon une des revendications 1 à 3, caractérisé en ce que la gaine (14) présente à chacune de ses deux extrémités un évasement (16) qui est comblé par la matière du noyau.

5. Procédé de fabrication d'un crampon de bâche selon une des revendications 1 à 4, caractérisé en ce qu'on emmanche une pièce tubulaire (14) en matière résistante à la corrosion et à l'usure sur un noyau (18) en forme de tige, en aluminium ou alliage d'aluminium, de telle manière que le noyau (18) en forme de tige déborde d'une distance (x) aux deux extrémités de la pièce tubulaire (14), puis on transforme le noyau (18) en forme de tige, avec la pièce tubulaire (14) emmanchée sur ce noyau, en un arceau.

6. Procédé selon la revendication 5, caractérisé en ce qu'on munit la surface du noyau (18) en forme de tige d'une pâte d'étanchéité avant de l'emmancher dans la pièce tubulaire (14).

7. Procédé selon la revendication 5, caractérisé en ce qu'avant l'emmanchement du noyau (18) en forme de tige, on évase la pièce tubulaire (14) des deux côtés et on refoule dans l'évasement (16) les extrémités du noyau (18) en forme de tige qui débordent aux deux extrémités de la pièce tubulaire (14).
